# EUROPEAN PATENT SPECIFICATION

(11) **EP 2 177 805 B1**
(45) Date of publication and mention of the grant of the patent: **23.05.2018**
(21) Application number: 09172809.7
(22) Date of filing: 12.10.2009
(51) Int. Cl.: F16L 11/04, B32B 7/12, B32B 27/08, B32B 27/30, B32B 27/34, B32B 27/40, B32B 1/08

(54) **Synthetic resin tube with gas barrier properties**
Kunstharzröhre mit Gassperreigenschaften
Tube en résine synthétique avec des propriétés de barrière contre les gaz

(30) Priority: 14.10.2008 JP 2008265369
(43) Date of publication of application: 21.04.2010
(73) Proprietor: Toyox Co., Ltd., Kurobe-shi Toyama 9380806 (JP)
(72) Inventor: Kanai, Katsumasa, Toyama Wakayama (JP)
(74) Representative: Kirkham, Nicholas Andrew

(56) References cited:
- EP-A1- 1 146 273
- JP-A- S62 249 737
- US-A- 5 706 865
- US-A1- 2003 087 053

## Description

### BACKGROUND OF THE INVENTION

### Technical Field

The present invention relates to a cooling/heating radiation panel having a flexible synthetic resin tube with gas barrier properties mounted thereon, wherein the tube is a heat exchange pipe.

### Background Art

Conventionally, a resin-based flexible heat exchange pipe has been disposed on a radiation panel for cooling/heating, for example. This resin-based heat exchange pipe has features that it is well-workable, lightweight, and inexpensive. However, the resin-based heat exchange pipe is poor in gas barrier properties relative to a gas such as oxygen, and the oxygen contained in air enters the water of a heat exchange medium, passing through the heat exchange pipe, which has thus caused corrosion or the like of circuit components of the heat exchange medium.

Therefore, as disclosed in Patent Document 1 of the prior art, there is also proposed a multilayered pipe having: an inner layer made of cross-linking polyethylene; a gas barrier layer provided at an outer circumferential side of the inner layer; and a protective layer provided at an outer circumferential side of the gas barrier layer. In this multilayered pipe, the cross-linking polyethylene of the inner layer is silane cross-linking polyethylene; the gas barrier layer is made of an ethylene-vinyl alcohol copolymer; and a low-density polyethylene resin or a straight-chain low-density polyethylene is employed in the protective layer as an outer layer.

Similarly, a hose for beverage use, disclosed in reference 2, is a hose which is integrated by extrusion-molding an inner layer made of: a polyethylene or ethylene-vinyl acetate copolymer; an intermediate layer made of an ethylene-vinyl alcohol copolymer; and an outer layer made of an ethylene-vinyl acetate copolymer, altogether.
***[Patent Document 1]*** Japanese Laid-open Patent Application No. 2006-289964
***[Patent Document 2]*** Japanese Laid-open Patent Application No. 2008-133897

JP S62 249737 A relates to a double layer tube for a car. US 2003/087053 A1 relates to multilayer articles including a fluoroelastomer layer and a barrier layer and method of making the same.

### DISCLOSURE OF THE INVENTION

### Problem(s) to Be Solved by the Invention

However, the abovementioned hose having gas barrier properties, disclosed in Patent Document 1 or 2, had high rigidity and low flexibility of an ethylene-vinyl alcohol copolymer layer; and a low degree of freedom in bending performance or deformation. In addition, because of its low flexibility, if a radius of curvature is reduced, the cross section of the hose is broken causing a flow resistance and a reduced flow rate or stagnant flow may arise as well.

The present invention has been made in view of the above-described problem associated with the prior art, and aims to provide a synthetic resin tube with gas barrier properties, which is flexible and easily bendable, and moreover, is high in gas barrier properties.

### SUMMARY OF THE INVENTION

### Means for Solving the Problem(s)

The present invention is directed to a flexible synthetic resin tube with gas barrier properties, through which a gas such as oxygen is hardly passed, wherein: a polyurethane layer is formed on an inner circumferential face; an ethylene-vinyl alcohol copolymer layer is concentrically formed outside of the polyurethane layer; and a polyurethane layer is concentrically formed outside of the copolymer layer as well.

A polyamide layer is formed in an innermost layer of the synthetic resin tube with gas barrier properties. In the synthetic resin tube with gas barrier properties, the ethylene-vinyl alcohol copolymer layer is provided in plurality independently. Further, a modified olefin layer is provided as an adhesive layer between the plurality of the ethylene-vinyl alcohol copolymer layers.

The synthetic resin tube with gas barrier properties is a heat exchange pipe mounted on a radiation panel for cooling/heating, through which a fluid serving as a heat medium passes.

### Advantageous Effect(s) of the Invention

The synthetic resin tube with gas barrier properties, of the present invention, is flexible and easily bendable, and moreover, is high in gas barrier properties. Thus, even if this resin tube is used in a pipe for heat exchange fluid or a pipe for beverage use, the entry of a gas such as oxygen from the outside does not occur, so that corrosion of pipeline components can be thereby restrained. Further, because of its high flexibility, a complicated pipeline can be easily laid out, increasing the degree of freedom in setup site or usage as well.

### BRIEF DESCRIPTION OF THE DRAWINGS

FIG 1 is a partially fragmental perspective view of a synthetic resin tube with gas barrier properties, according to a first embodiment of the present invention.
FIG. 2 is a front view of a cooling/heating panel having mounted thereon a heat exchange pipe made of the synthetic resin tube with gas barrier properties, according to the first embodiment.
FIG. 3 is a cross section taken along the line A-A of FIG. 2.
FIG. 4 is an enlarged cross section taken along the line A-A.
FIG. 5 is a schematic diagram showing a method of using the synthetic resin tube with gas barrier properties, according to the embodiment.
FIG. 6 is a partially fragmental perspective view showing a synthetic resin tube with gas barrier, according to a second embodiment of the present invention.
FIG. 7 is a partially fragmental perspective view showing a synthetic resin tube with gas barrier, according to a third embodiment of the present invention.

### EXPLANATION OF REFERENCE NUMERALS

- 12: Radiation panel
- 16: Heat exchange pipe
- 17: First layer
- 19: Second layer
- 21: Third layer

### DESCRIPTION OF THE SPECIFIC EMBODIMENTS

### Best Mode for Carrying out the Invention

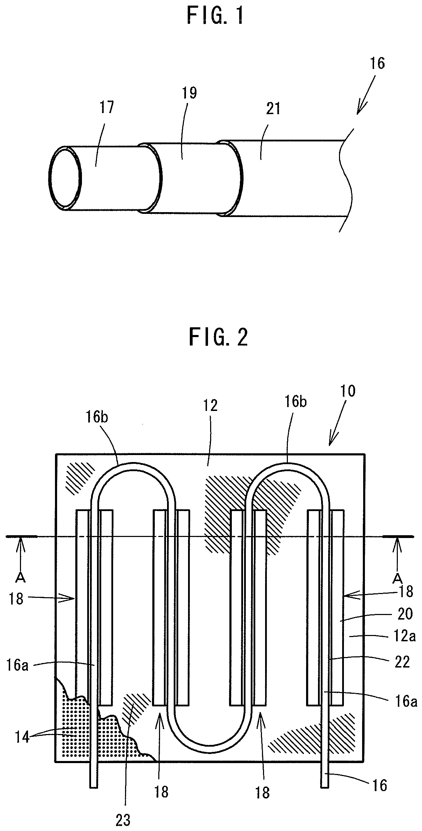

Hereinafter, embodiments of the present invention will be described referring to the drawings. FIGS. 1 to 5 show a first embodiment of the present invention, and a synthetic resin tube with gas barrier properties, of the embodiment, is employed as a heat exchange pipe 16 of a cooling/heating 10. The heat exchange pipe 16, as shown in FIG. 1, is structured to be three-layered; a first layer 17 positioned on an inner circumferential face is formed of polyurethane; a second layer 19 outside of the first layer is formed of an ethylene-vinyl alcohol copolymer (hereinafter, referred to as EVOH); and a third layer 21 positioned on an outer circumferential face outside of the second layer is also formed of polyurethane.

The EVOH has high gas barrier properties, and precludes the oxygen contained in air from passing through a tube wall and dissolving into a heat exchange fluid such as a hot water passing through a heat exchange pipe 16. Since polyurethane is soft and is easily deformable, the pipe is easily deformed even if the EVOH that is comparatively hard is provided as the second layer 19.

A process of manufacturing the synthetic resin tube with gas barrier properties, for example, sequentially executes the steps of: extruding a variety of resins in a tubular shape; winding up the article extrusion-molded in the tubular shape; repeating the articles extrusion-molded in the tubular shape; coating two or more resin layers including a resin with gas barrier properties and a protective-layer resin outside thereof on the article extrusion-molded in the tubular shape by means of a cross dice. The cross dice is a dice which is capable of extruding two and more types of resins, the dice being capable of passing the article extrusion-molded in the tubular shape at a center part. In the manufacture of the synthetic resin tube with gas barrier properties, a variety of resins are laminated by mean of co-extrusion molding, allowing them to be integrated with each other.

The cooling/heating panel 10 is provided with a planar radiation panel 12; the radiation panel 12 is molded with a metal plate made of a metal such as aluminum or iron, a plaster board, or concrete; and a plurality of acoustic absorption holes 14 are perforated and formed. On a back face 12a of the radiation panel 12, a heat exchange pipe 16 is provided to be held by means of a holding member 18, as described later. In the heat exchange pipe 16, a straight portion 16a crossing a unidirectional width of the radiation panel 12 and a curved portion 16b returning while it is curved before reaching an end part of the radiation panel 12 are alternately formed and consecutively meander.

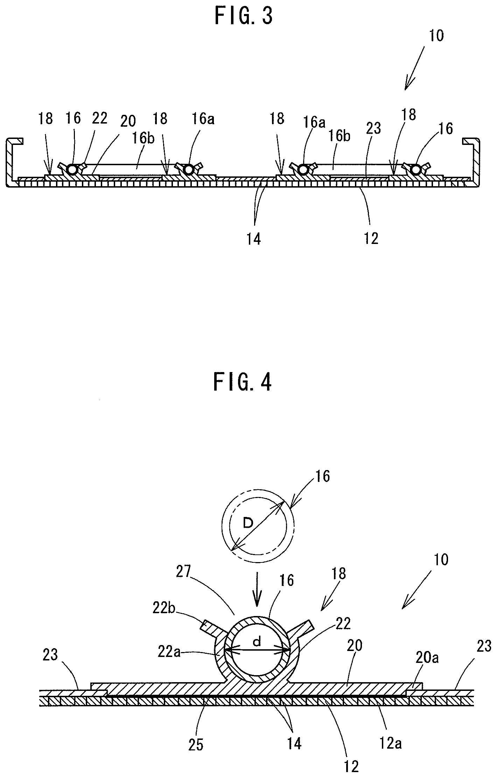

On the back face 12a of the radiation 12 panel, as shown in FIGS. 2 to 4, a holding member 18 for holding the straight portion 16a of the heat exchange pipe 16 is mounted. The holding member 18 is made of a metal such as an aluminum-extruded material; is an elongated member to be mounted along the straight portion 16a of the heat exchange pipe 16; and is uniform in a longitudinal sectional shape. In a cross-sectional view, as shown in FIG. 4, the holding member 18 is provided with a soaking plate 20 which is a plate body superimposed on the back face 12a of the radiation panel 12, and a holding portion 22 for holding the heat exchange pipe 16 is provided at a center of the soaking plate 20. At the holding portion 22, a semicircular curved portion 22a which is erected from the soaking plate 20 and opens upward is formed, and at a tip end of the curved portion 22a, a wing portion 22b expanding to the outside is integrally formed.

An inside diameter d of the curved portion 22a becomes slightly smaller than an outside diameter D of the heat exchange pipe 16 at normal temperature. This curved portion is formed so that an inner circumferential face of the curved portion 22a comes into intimate contact with an outer circumferential face of the heat exchange pipe 16; and is adapted to elastically hold side faces of the heat exchange pipe 16 between both sides of the curved portion. In addition, an opening 27 between a pair of curved portions 22a is formed to be slightly smaller than the inside diameter d of the holding member 18, exerted by the curved portion 22a; the heat exchange pipe 16 is elastically deformed by receiving it by the wing portion 22b, and is provided to be engagable between the curved portions 22a. Polyurethane of the heat exchange pipe 16 has high elasticity, and is easily put into the holding portion 22 of the holding member 18, with the pipe being elastically deformed. Further, polyurethane has rebound resilience; and therefore, after the pipe has been put into the holding portion 22, the expanded outer diameter is returned to its original diameter; and an outer surface of the heat exchange pipe 16 is reliably held in intimate contact with an internal face of the holding portion 22, improving thermal conduction.

Primer treatment for the sake of ensuring adhesiveness is applied to the back face 12a of the radiation panel 12 on which the holding member 18 is to be mounted; and the coated back face 12a is bonded with a hot melt adhesive 25 made of a thermally plastic resin, for example. In addition, a back face of the holding member 18 is black-coated so as to be hardly visible via the acoustic absorption hole 14 from a top side of the radiation panel 12.

Next, a method of mounting the heat exchange pipe 16 on the holding member 18 will be described. The heat exchange pipe 16 is pressed between a pair of wing portions 22b; and the curved portion 22a and the heat exchange pipe 16 are elastically deformed, and are pushed between the curved portions 22a, whereby they are resiliently latched. At this time, a jig used exclusively for pushing the heat exchange pipe 16 against the curved portions 22a of the holding member 18 may be employed.

On the back face 12a of the radiation panel 12, a noninflammable sheet 23 may be laid out at a portion other than the holding member 18. The noninflammable sheet 23 is a ceramic sheet or a glass-wool sheet, for example, or any other noninflammable sheet-like material. The noninflammable sheet 23, as shown in FIG. 3, is inserted into a cutout portion 20a formed on a back face of a bilateral rim part of the soaking plate 20 of the holding member 18, and the rim part is thereby held.

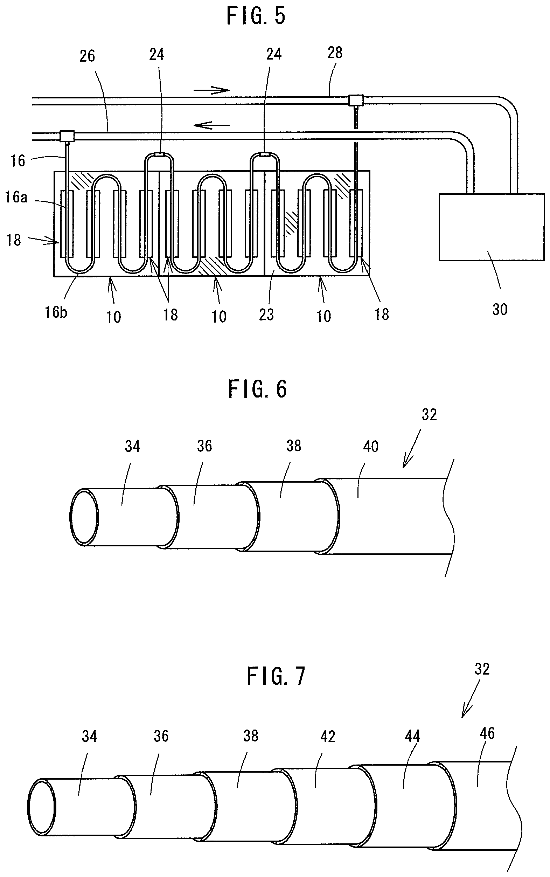

Next, a method of using ceiling-mounted cooling/heating panels 10 will be described referring to FIG. 5. The ceiling-mounted cooling/heating panels 10 are arranged and mounted on an interior ceiling so that the back face 12a of the radiation panel 12 is at a loft side. Afterwards, ends of the heat exchange pipe 16 are connected to each other by means of a connecting member 24. One end of the heat exchange pipe 16 with the plurality of ceiling-mounted cooling/heating panels 10 being connected thereto is connected to a supply-side main pipe 26, and the other end of the pipe is connected to a return-side main pipe 28. The supply-side main pipe 26 and the return-side main pipe 28 are connected to a heat source 30 such as a water heater.

The heat source 30 supplies a heat exchange fluid of a desired temperature to the heat exchange pipe 16 of the ceiling-mounted cooling/heating panel 10. The heat exchange fluid is water, for example. The water of a predetermined temperature that was supplied from the heat source 30 to the supply-side main pipe 26 is supplied from one end of the heat exchange pipe 16. The supplied water passes through the plurality of heat exchange pipes 16 connected via the connecting member 24, and is then heat-exchanged; and the heat-exchanged water flows from the other end to the return-side main pipe 28, and further, returns to the heat source 30.

The heat exchange pipe 16 that is a synthetic resin tube with gas barrier properties, of the embodiment, is flexible and easily bendable, and is high in gas barrier properties, thus precluding a gas such as oxygen from entering a heat exchange fluid from the outside and allowing corrosion of pipeline components to be restrained. Further, because of its high flexibility, at the time of mounting on the radiation panel 12, a complicated pipeline is easily laid out, increasing a degree of freedom in setup site or usage. In particular, the heat exchange pipe 16 is structured to be three-layered, and the first layer 17 and the third layer 21 are made of polyurethane; and therefore, the pipe is flexible and easily processed, and the execution of work is also facilitated.

Further, the outside diameter D of the heat exchange pipe 16 becomes slightly larger than the inside diameter d of the holding member 18 at normal temperature; the third layer 21 on the outer circumferential face of the heat exchange pipe 16 reliably comes into intimate contact with the internal face of the holding member 18; and thermal conduction is appropriately performed.

Next, a second embodiment of the present invention will be described referring to FIG. 6. Hereinafter, like constituent elements of the above-described first embodiment are designated by like reference numerals and a duplicate description is omitted. A synthetic resin tube 32 with gas barrier, of the second embodiment, is structured to be four-layered as shown in FIG. 6; a first layer 34 positioned on an inner circumferential face is made of polyamide; and a second layer 36 outside of the first layer is made of polyurethane. A third layer 38 outside of the second layer is made of EVOH; and a fourth layer 40 positioned on an outer circumferential face outside of the third layer is made of polyurethane. Polyamide of the first layer 34 is excellent in water resistance.

In addition to the advantageous effect similar to that of the synthetic resin tube with gas barrier properties, of the above-described first embodiment, the synthetic resin tube 32 with gas barrier properties, of the second embodiment, has high water resistance, and is capable of enhancing durability of pipelines such as heat exchange pipes. Further, the inside of the tube is hardened by polyamide of the first layer 34; the tube is neither easily broken nor crushed by bending it; and even if the tube is curved, a desired flow rate can be reliably ensured.

Next, a third embodiment of the present invention will be described referring to FIG. 7. Hereinafter, like constituent elements of the above-described two embodiments are designated by like reference numerals and a duplicate description is omitted. A synthetic resin tube 32 of the third embodiment is structured to be six-layered as shown in FIG. 7; a first layer 34 positioned on an inner circumferential face is made of polyamide; and a second layer 36 outside of the first layer is made of polyurethane. In addition, a third layer 38 outside of the second layer is made of the EVOH, and in a fourth layer outside of the third layer, a modified olefin layer is concentrically provided as an adhesive layer 42. Further, a fifth layer 44 is made of the EVOH, like the third layer 38, and a sixth layer 46 is made of polyurethane. Modified polyolefin enhances compatibility/adhesiveness with the third and fifth layers 38 and 44 that are EVOH layers.

Polyethylene such as low-density polyethylene (LDPE), middle-density polyethylene (MDPE), or high-density polyethylene (HDPE) or polypropylene, etc., is preferred as polyolefin employed for modified polyolefin.

A modified elastomer may be employed in place of modified olefin. A polymeric substance exhibiting its rubber elasticity at normal temperature, the polymeric substance expanding twice or more at room temperature and momentarily returning to its original shape when an external force is eliminated, is suitable as an elastomer employed for the modified elastomer.

The modified polyolefin or the modified elastomer is obtained by introducing a functional group which can react with a hydroxyl group into polyolefin or an elastomer. The functional group that can react with hydroxyl group is selected from among: a carboxyl group; a carboxylate ester group; a carboxylate anhydride group; a carboxylate salt group; a boronic acid group; a boronate ester group; a boronate anhydride group; a boronate salt group; an isocyanate group; or other groups consisting of an ester bond, an urethane bond, and an amide bond, and among them, at least one functional group is preferred. In particular, in order to remarkably improve adhesiveness with the layer made of the EVOH, at least one functional group selected from among the groups consisting of: a carboxyl group; a carboxylate ester group; a carboxylate anhydride group; a carboxylate salt group; a boronic acid group; a boronate ester group; a boronate anhydride group; and a boronate salt group, is preferred as the functional group that can react with the hydroxyl group.

According to the synthetic resin layer with gas barrier properties, of the third embodiment, in addition to the advantageous effect similar to that of the synthetic resin tube with gas barrier properties, of the above-described two embodiments, a gas barrier layer is two-layered, and gas barrier properties is improved; and further, the third and fifth layers 38 and 44 that are EVOH layers are obtained as thin layers, thereby making it possible to enhance flexibility.

The synthetic resin tube with gas barrier properties, of the present invention, is not limitative to the above-described embodiments; a polyolefin-based resin such as polyethylene other than polyamide or any other publicly known resin may be laminated on an interior wall face of the synthetic resin tube with gas barrier properties or the outside of the tube may be coated with nylon or the like. Further, as usage, apart from the heat exchange pipe, the synthetic resin tube can be utilized as a pipe for beverage use or any other pipeline adapted to flow a liquid.

## Claims

1. A cooling/heating radiation panel (10) having a flexible synthetic resin tube with gas barrier properties mounted thereon, through which tube (16) a gas such as oxygen is hardly passed, wherein a polyurethane layer (17) is formed on an inner circumferential face of the tube (16); an ethylene-vinyl alcohol copolymer layer (19) is formed outside of the polyurethane layer (17); and a polyurethane layer (21) is coaxially formed outside of the copolymer layer, **characterised in that** the tube (16) is a heat exchange pipe through which a liquid serving as a heat medium passes, wherein a holding member (18) is provided with a soaking plate (20), wherein the holding member is made of metal and is an elongated member to be mounted along the straight portion of the heat-exchange pipe, and is uniform in a longitudinal sectional shape, wherein the soaking plate (20) is a plate body superimposed on the back face (12a) of the radiation panel (10) and a holding portion (22) for holding the heat exchange pipe is provided at a centre of the soaking plate (20), wherein at the holding portion (22) a semi-circular curved portion (22a) which is erected from the soaking plate (20) and opens upward is formed, wherein an inside diameter, d, of the curved portion (22a) becomes slightly smaller than an outside diameter, D, of the heat exchange pipe (16) at normal temperature, wherein this curved portion is formed so that the inner circumferential face of the curved portion (22a) comes into intimate contact with an outer circumferential face of the heat exchange pipe (16) and is adapted to elastically hold side faces of the heat exchange pipe (16), wherein an opening (27) between a pair of curved portions (22a) is formed to be slightly smaller than the inside diameter d of the holding member.

2. The radiation panel according to claim 1, wherein a polyamide layer is formed in an innermost layer of the tube (16) with gas barrier properties.

3. The radiation panel according to claim 1, wherein the tube (16) with gas barrier properties allows the ethylene-vinyl alcohol copolymer layer to be provided independently in plurality.

4. The radiation panel according to claim 3, wherein a modified olefin layer is provided as an adhesive layer between the plurality of ethylene-vinyl alcohol copolymer layers.

## Patentansprüche

1. Strahlungsplatte zum Kühlen/Heizen (10) mit einem daran montierten flexiblen Kunstharzschlauch mit Gassperre-Eigenschaften, wobei durch den Schlauch (16) kaum Gas, wie beispielsweise Sauerstoff, geleitet wird, wobei eine Polyurethanschicht (17) auf einer innen umlaufenden Fläche des Schlauchs (16) gebildet ist, eine Ethylen-Vinylalkohol-Copolymer-Schicht (19) außerhalb der Polyurethanschicht (17) gebildet ist und eine Polyurethanschicht (21) koaxial außerhalb der Copolymerschicht gebildet ist, **dadurch gekennzeichnet, dass** der Schlauch (16) eine Wärmeaustauschleitung ist, durch die eine Flüssigkeit läuft, die als Wärmemedium dient, wobei ein Halteelement (18) mit einer Tränktafel (20) ausgestattet ist, wobei das Halteelement aus Metall besteht und ein längliches Element ist, das entlang des geraden Abschnitts der Wärmeaustauschleitung zu montieren ist, und in einer Längsschnittform gleichmäßig ist, wobei die Tränktafel (20) ein Tafelkörper ist, der auf die Rückseite (12a) der Strahlungsplatte (10) aufgesetzt ist und in der Mitte der Tränktafel (20) ein Halteabschnitt (22) zum Halten der Wärmeaustauschleitung bereitgestellt ist, wobei am Halteabschnitt (22) ein halbrunder gekrümmter Abschnitt (22a), der von der Tränktafel (20) nach oben steht und sich nach oben öffnet, gebildet ist, wobei ein Innendurchmesser d des gekrümmten Abschnitts (22a) bei normaler Temperatur etwas kleiner als ein Außendurchmesser D der Wärmeaustauschleitung (16) wird, wobei dieser gekrümmte Abschnitt derart gebildet ist, dass die innen umlaufende Fläche des gekrümmten Abschnitts (22a) in engen Kontakt mit einer außen umlaufenden Fläche der Wärmeaustauschleitung (16) gelangt, und dafür eingerichtet ist, Seitenflächen der Wärmeaustauschleitung (16) elastisch zu halten, wobei eine Öffnung (27) zwischen einem Paar gekrümmter Abschnitte (22a) derart gebildet ist, dass sie etwas kleiner als der Innendurchmesser des Halteelements ist.

2. Strahlungsplatte nach Anspruch 1, wobei in einer ganz innen liegenden Schicht des Schlauchs (16) eine Polyamidschicht mit Gassperre-Eigenschaften gebildet ist.

3. Strahlungsplatte nach Anspruch 1, wobei es der Schlauch (16) mit Gassperre-Eigenschaften ermöglicht, dass die Ethylen-Vinylalkohol-Copolymer-Schicht unabhängig mehrfach bereitgestellt ist.

4. Strahlungsplatte nach Anspruch 3, wobei die modifizierte Olefinschicht als eine Klebstoffschicht zwischen den mehreren Ethylen-Vinylalkohol-Copolymer-Schichten bereitgestellt ist.

## Revendications

1. Panneau rayonnant de refroidissement/chauffage (10) ayant un tube en résine synthétique flexible avec des propriétés de barrière contre les gaz monté sur ce dernier, à travers lequel tube (16), un gaz tel que l'oxygène passe difficilement, dans lequel une couche de polyuréthane (17) est formée sur une face circonférentielle interne du tube (16) ; une couche de copolymère d'éthylène-alcool vinylique (19) est formée à l'extérieur de la couche de polyuréthane (17) ; et une couche de polyuréthane (21) est formée de manière coaxiale à l'extérieur de la couche de copolymère, **caractérisé en ce que** le tube (16) est un tuyau d'échange de chaleur à travers lequel passe un liquide servant de fluide caloporteur, dans lequel un élément de maintien (18) est prévu avec une plaque de trempage (20), dans lequel l'élément de maintien est réalisé à partir de métal et est un élément allongé pour être monté le long de la partie droite du tuyau d'échange de chaleur et est uniforme dans une forme transversale longitudinale, dans lequel la plaque de trempage (20) est un corps de plaque superposé sur la face arrière (12a) du panneau rayonnant (10) et une partie de maintien (22) pour maintenir le tuyau d'échange de chaleur est prévue au niveau d'un centre de la plaque de trempage (20), dans lequel au niveau de la plaque de maintien (22), on forme une partie semi-circulaire incurvée (22a) qui est redressée à partir de la plaque de trempage (20) et s'ouvre vers le haut, dans lequel un diamètre intérieur d de la partie incurvée (22a) devient légèrement plus petit qu'un diamètre extérieur D du tuyau d'échange de chaleur (16) à une température normale, dans lequel cette partie incurvée est formée de sorte que la face circonférentielle interne de la partie incurvée (22a) vient en contact immédiat avec une face circonférentielle externe du tuyau d'échange de chaleur (16) et est adaptée pour maintenir, de manière élastique, les faces latérales du tuyau d'échange de chaleur (16), dans lequel une ouverture (27) entre une paire de parties incurvées (22a) est formée pour être inférieure au diamètre intérieur d de l'élément de maintien.

2. Panneau rayonnant selon la revendication 1, dans lequel une couche de polyamide est formée dans la couche située le plus à l'intérieur du tube (16) avec des propriétés de barrière contre les gaz.

3. Panneau rayonnant selon la revendication 1, dans lequel le tube (16) avec les propriétés de barrière contre les gaz permet de prévoir la couche de copolymère d'éthylène-alcool vinylique indépendamment en plusieurs exemplaires.

4. Panneau rayonnant selon la revendication 3, dans lequel une couche d'oléfine modifiée est prévue en tant que couche adhésive entre la pluralité de couches de copolymère d'éthylène-alcool vinylique.
